# EUROPÄISCHE PATENTSCHRIFT

(11) **EP 2 787 322 B1**
(45) Veröffentlichungstag und Bekanntmachung des Hinweises auf die Patenterteilung: **04.10.2017**
(21) Anmeldenummer: 13162634.3
(22) Anmeldetag: 05.04.2013
(51) Int. Cl.: G01C 15/00, G01S 17/06, G01S 7/481

(54) **Geodätisches Referenzieren von Punktwolken**
Georeferencing of point clouds
Référencement géodésique de nuages de points

(43) Veröffentlichungstag der Anmeldung: 08.10.2014
(73) Patentinhaber: Leica Geosystems AG, 9435 Heerbrugg (CH)
(72) Erfinder: Zogg, Hans-Martin, CH-8592 Uttwil (CH); Kotzur, Norbert, CH-9450 Altstätten (CH)
(74) Vertreter: Gyaja, Christoph Benjamin

(56) Entgegenhaltungen:
- EP-A2- 1 321 777
- US-A1- 2005 057 745
- US-A1- 2012 057 174

## Beschreibung

Die Erfindung betrifft ein geodätisches Vermessungsgerät nach Anspruch 11, ein geodätisches Vermessungsverfahren nach Anspruch 1 zum Rerefenzieren eines Koordinatensystems mittels eines geodätischen Vermessungsgeräts nach Anspruch 11, sowie ein Computerprogrammprodukt nach Anspruch 15.

Zum Vermessen eines Zielpunktes sind seit der Antike zahlreiche geodätische Vermessungsgeräte bekannt. Als räumliche Standarddaten werden dabei Richtung bzw. Winkel und meist auch Entfernung von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und ggf. Distanzmessfunktion, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einem Reflektor (z.B. einem Rundum-Prisma) zur Definition der Messtrecke bzw. des Messpunktes. Bei solchen Vermessungsaufgaben werden zur Steuerung des Messvorgangs sowie zur Festlegung oder Registrierung von Messparametern eine Anzahl von Daten, Anweisungen, Sprache und weiteren Informationen zwischen Zielobjekt - insbesondere einem handhaltbaren Datenerfassungsgerät seitens des Zielobjekts - und zentralem Messgerät übertragen. Beispiele für solche Daten sind die Identifikation des Zielobjekts (Art des verwendeten Prismas), Neigung des Lotstocks, Höhe des Reflektors über Grund, Reflektorkonstanten oder Messwerte wie Temperatur oder Luftdruck. Diese Informationen bzw. situationsbedingten Parameter sind erforderlich, um eine hochpräzise Anzielung und Vermessung des durch den Lotstab mit Prisma definierten Messpunktes zu ermöglichen.

Moderne Totalstationen weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann.

Das optische System bzw. der optische Sichtkanal der Visiereinrichtung enthält meist eine Objektivlinsengruppe, ein Bildumkehrsystem, eine Fokussieroptik, eine Strichplatte zur Erzeugung eines Fadenkreuzes und ein Okular, die z.B. in dieser Reihenfolge von der Objektseite her angeordnet sind. Die Position der Fokussierlinsengruppe wird abhängig von der Objektentfernung so eingestellt, dass ein scharfes Objektbild auf der in der Scharfstellebene angeordneten Strichplatte entsteht. Dieses kann dann durch das Okular betrachtet oder z.B. anhand einer koaxial angeordneten Kamera erfasst werden.

Beispielhaft ist der Aufbau gattungsgemässer Zielfernrohre von geodätischen Geräten in der EP 1 081 459 oder der EP 1 662 278 gezeigt.

Da Zielobjekte (z.B. die für geodätische Zwecke meist verwendeten Lotstäbe mit Zielmarke wie einem Rundum-Prisma) anhand der Visiereinrichtung trotz der oft bereitgestellten 30-fachen optischen Vergrösserung mit blossem Auge nicht genügend präzise angezielt werden können (d.h. nicht geodätischen Genauigkeitsanforderungen entsprechend), weisen gängige Vermessungsgeräte inzwischen standardmässig eine automatische Zielverfolgungs-Funktion für als Ziel-Reflektor dienende Prismen (ATR: "Automatic Target Recognition") auf. Dafür sind gängigerweise eine weitere separate ATR-Lichtquelle - z.B. ein Multimodefaserausgang, der optische Strahlung mit einer Wellenlänge im Bereich von 850 nm emittiert - und ein spezieller, für diese Wellenlänge sensitiver ATR-Detektor (z.B. CCD-Flächensensor) zusätzlich im Teleskop integriert. Beispielsweise wird in der EP 2 141 450 ein Vermessungsgerät mit einer Funktion zur automatischen Anzielung eines retro-reflektierenden Ziels sowie mit einer automatischen Zielverfolgungsfunktionalität beschrieben.

Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik - aufweisen oder über einen Autofokus verfügen, wobei das Verändern der Fokusposition z.B. durch Servomotoren erfolgt. Beispielsweise ist eine solche Visiereinrichtung eines geodätischen Vermessungsgeräts in der EP 2 219 011 beschrieben. Automatische Fokussiereinrichtungen für Zielfernrohre geodätischer Geräte sind z.B. aus der DE 197 107 22, der DE 199 267 06 oder der DE 199 495 80 bekannt.

Mittels einer solchen Bilderfassungseinheit können neben dem Vermessen von bestimmten Zielpunkten auch Bilder einer Messszene erfasst werden. Damit kann ein zu vermessendes Objekt in dem Bild erfasst und gegebenenfalls einem Benutzer auf einem Display des Vermessungsgeräts dargestellt werden. Basierend auf diesem Bild können weitere Informationen für das Objekt abgeleitet werden.

Durch eine entsprechende Bildverarbeitung können beispielsweise eine Oberflächenbeschaffenheit für das Objekt oder eine räumliche Ausdehnung des Objekts zumindest grob bestimmt werden. Die räumliche Ausdehnung oder die Form des Objekts können dabei mittels Kantenextraktion auf Basis des Bildes bestimmt werden.

Für eine genauere Bestimmung dieser Objekteigenschaften können zusätzlich zu den Bildinformationen Positionsinformationen für einen oder mehrere Punkte, die auf dem Objekt liegen, berücksichtigt werden. Hierzu wird der eine oder die mehreren Punkte mit dem Vermessungsgerät genau angezielt und vermessen. Die so hinsichtlich ihrer Position bestimmten Punkte werden als so genannte Stützpunkte zusammen mit der Bildinformation verarbeitet, wodurch eine genauere Angabe z.B. über die Lage des im Bild erfassten Objektteils gemacht werden kann.

Nachteilig ist hierbei, dass eine grossflächige topographische und geodätisch genaue Objektvermessung mit einer Totalstation nicht möglich ist bzw. einen unverhältnismässig hohen Zeitaufwand bedeutet (im Vergleich zu einem Bilderfassen des Objekts), da jeder zu vermessende Punkt einzeln angezielt und dessen Position bei fester Ausrichtung der Messstrahlung bestimmt werden müsste. Zudem kann insbesondere die Lagebestimmung für den durch das Bild abgebildeten Objektteil nur abhängig von den bestimmten Stützpunkten vorgenommen werden und eine gute Genauigkeit nur mit einer entsprechend grossen Anzahl von Stützpunkten erreicht werden, wobei weiterhin nur auf Basis von einer Bildverarbeitung die Form des Objektteils (z.B. wenn das Objekt eine gekrümmte Oberfläche aufweist) ebenfalls nur mit einer sehr limitierten Genauigkeit ermittelt werden kann. Ferner zeigt die Druckschrift US 2005/0057745 ein manuell schwenkbar gelagertes Messinstrument mit einer Einzelpunktmessfunktionalität, einer Referenzierungsfunktionalität und einer Anzieleinheit, bestehend aus Laserpointer und Display, wobei jedoch eine Scanfunktionalität zur zügigen Vermessung im Nahbereich manuell durch den Benutzer gesteuert wird.

Es ist daher eine Aufgabe der vorliegenden Erfindung ein verbessertes Vermessungsgerät und ein entsprechendes Verfahren bereitzustellen, welches eine verbesserte, schnellere und genauere grossflächige Oberflächenvermessung eines Objekts erlaubt, insbesondere wobei die Lage des zu vermessenden Objekts (georeferenziert) bestimmbar ist. Eine weitere Aufgabe der Erfindung ist das Bereitstellen eines entsprechenden Vermessungsgeräts, insbesondere einer Totalstation, wobei eine genauere Objekterfassung und zudem eine Bereitstellung von geräteunabhängigen Objektkoordinaten für das Objekt ausführbar ist.
Eine weitere Aufgabe der Erfindung ist das Bereitstellen eines Vermessungsgeräts, mit dem ein Messfortschritt bezüglich eines absoluten Koordinatensystems (alternativ zu dem inneren Bezugssystem des Messgeräts) überwachbar ist. Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.
Die Erfindung betrifft ein geodätisches Vermessungsverfahren zum Referenzieren eines Koordinatensystems mittels eines geodätischen Vermessungsgeräts. Dabei erfolgen ein Ableiten einer Oberflächeninformation für ein Objekt bezüglich einem inneren Koordinatensystem des geodätischen Vermessungsgeräts, insbesondere bezüglich einer Form und/oder räumlichen Ausdehnung des Objekts, und ein geodätisch genaues Einzelpunktmessen zu mindestens einem Referenzpunkt, wobei durch den mindestens einen Referenzpunkt ein Positionsbezug zu einem äusseren Koordinatensystem bereitgestellt wird, eine Messstrahlung präzise auf den mindestens einen Referenzpunkt ausgerichtet wird und bei der Ausrichtung der Messstrahlung auf den mindestens einen Referenzpunkt zumindest eine Richtung zu dem Referenzpunkt in dem inneren Koordinatensystem bestimmt wird.
Erfindungsgemäss wird zusätzlich ein referenzpunktunabhängiges Scannen zum Ableiten der Oberflächeninformation ausgeführt, mit einem automatischen Abtasten eines bezüglich dem Objekt bestimmten Scanbereichs durch motorisiert geführtes, fortlaufendes Ausrichtungsändern der Messstrahlung, mit einem Bestimmen von einer jeweiligen Entfernung und einer jeweiligen Ausrichtung der für eine Entfernungsmessung emittierten Messstrahlung für innerhalb des bestimmten Scanbereichs liegende Scanpunkte, in einer vorbestimmten Scanpunktauflösung, und mit einem Erzeugen einer die Oberflächeninformation repräsentierenden und die Scanpunkte aufweisenden Punktwolke in dem inneren Koordinatensystem. Zudem wird ein derartiges Referenzieren, insbesondere automatisches Referenzieren, des inneren Koordinatensystems gegenüber dem äusseren Koordinatensystem basierend zumindest auf dem durch den Referenzpunkt bereitgestellten Positionsbezug zu dem äusseren Koordinatensystem und der bestimmten Richtung zu dem Referenzpunkt in dem inneren Koordinatensystem ausgeführt, dass zumindest eine Orientierung, insbesondere eine Lage, der Punktwolke im äusseren Koordinatensystem bestimmt ist.

Erfindungsgemäss kann somit sowohl eine Objektfläche mit einer vorbestimmten Punkt-zu-Punkt-Auflösung scannend erfasst werden (z.B. mit einer Messrate von 1000 bis 10000 oder mehr Messpunkten pro Sekunde und mit einer geodätischen Massstäben entsprechenden Messreichweite von bis zu Kilometern) als auch ein einzelner Referenzpunkt hochgenau angezielt und vermessen werden. Durch das Scannen wird eine Punktwolke für das zu vermessende Objekt abgeleitet, wobei die Position, Orientierung und Skalierung der Wolke zunächst nur in dem inneren Koordinatensystem des Vermessungsgeräts bekannt und bestimmt sind und dadurch (nur) relative Aussagen über das Objekt in Bezug auf das innere Bezugssystem möglich sind.

Zur Bestimmung z.B. einer absoluten Position, Orientierung und/oder räumlichen Ausdehnung der Punktwolke muss die Punktwolke in einem übergeordneten (äusseren) Koordinatensystem registriert werden, d.h. das innere Koordinatensystem wird gegenüber dem übergeordneten Koordinatensystem referenziert. Dieses Registrieren erfolgt erfindungsgemäss durch das Vermessen des einzelnen Referenzpunkts (oder mehrerer), dessen Position z.B. in dem übergeordneten Koordinatensystem bekannt ist (durch den Punkt wird also ein Positionsbezug zu dem äusseren Koordinatensystem bereitgestellt). Durch diese Informationen (bekannte Position im übergeordneten Koordinatensystem und durch die durch das Vermessen zumindest bekannte Richtung zu dem Punkt im inneren Koordinatensystem) erfolgt nun das gegenseitige Referenzieren der Koordinatensysteme, d.h. die Punktwolke wird in dem übergeordneten Koordinatensystem registriert.

Damit sind die Position, die Orientierung und auch die Skalierung der Punktwolke und ferner auch die Orientierung und/oder Lage des Objekts und dessen räumliche Ausdehnung in diesem äusseren System bestimmt und bekannt.

Die Schritte des Scannens, Referenzpunktvermessens und des gegenseitigen Registrierens werden dabei erfindungsgemäss alle mit und durch das Vermessungsgerät (oder einen dem Vermessungsgerät zugeordneten Controller) ausgeführt. Somit ist kein zusätzlicher post-processing-Schritt für das Registrieren der Punktwolke mehr erforderlich.

Für das Bereitstellen des Positionsbezugs zu dem äusseren Koordinatensystem ist erfindungsgemäss insbesondere eine absolute Position des mindestens einen Referenzpunkts in dem äusseren Koordinatensystem bekannt und das Referenzieren erfolgt basierend auf der bekannten absoluten Position des mindestens einen Referenzpunkts.

Der mindestens eine Referenzpunkt kann im Rahmen der Erfindung insbesondere in dem äusseren Koordinatensystem bereitgestellt werden durch einen geodätisch referenzieren Einmesspunkt oder einen Retro-Reflektor oder ein in einer bekannten Positionierung oder Ausrichtung aufgestelltes geodätisches Vermessungsgerät.

Gemäss einer speziellen Ausführungsform der Erfindung werden eine Entfernung zu dem mindestens einen Referenzpunkt und eine Position des Referenzpunkts in dem inneren Koordinatensystem bestimmt und das Referenzieren erfolgt zumindest basierend auf der bestimmten Position des Referenzpunkts im inneren Koordinatensystem.

Hinsichtlich der Ausführung des Scannvorgangs wird im Rahmen des Scannens erfindungsgemäss im Speziellen bei dem Bestimmen der jeweiligen Entfernung und der jeweiligen Ausrichtung der Messstrahlung die Ausrichtung der Messstrahlung innerhalb des bestimmten Scanbereichs kontinuierlich verändert. Dadurch kann ein echtes scannendes Abtasten von Objektoberfläche erreicht werden, wobei Messungen mit einem erfindungsgemässen geodätischen Vermessungsgerät, insbesondere mit einer Totalstation oder einem Theodoliten, während der Bewegung des Messstrahls hinreichend präzise ausgeführt werden können.

Ein derartiges Scannen mit einem geodätischen Vermessungsgerät ist im Wesentlichen durch die Verwendung hochgenauer, schneller und präzise steuerbarere Stellmotoren bzw. Servomotoren erzielbar, wodurch die Anzieleinheit des Vermessungsgeräts und damit die Messstrahlung schnell, exakt und kontinuierlich geführt werden kann und gleichzeitig die Winkelstellungen der Anzieleinheit und Entfernungen zu Zielen gemessen werden können. Die Steuerung- und Auswerteeinheit des Geräts ist zudem derart konfiguriert, dass die erfassten Messdaten entsprechend schnell verarbeitet werden können.

Im Rahmen des Referenzierens kann das innere Koordinatensystem erfindungsgemäss derart angepasst werden, insbesondere hinsichtlich Lage und Skalierung des inneren Koordinatensystems, dass das innere Koordinatensystem mit dem äusseren Koordinatensystem zusammen fällt, insbesondere dem äusseren Koordinatensystem entspricht. Das innere Koordinatensystem kann hierfür entsprechend rotiert, versetzt und/oder dessen Skalierung verändert werden. Das innere Koordinatensystem ist dann insbesondere identisch zum äusseren Koordinatensystem.

Gemäss einer weiteren speziellen Ausführungsform der Erfindung erfolgt das Referenzieren des inneren Koordinatensystems gegenüber dem äusseren Koordinatensystem basierend auf weiteren Referenzinformationen, insbesondere basierend auf einer zusätzlichen GNSS-Positionsinformation und/oder auf einem zusätzlichen dem inneren und äusseren Koordinatensystem gemeinsamen bekannten Punkt, dessen Position beispielsweise durch Einzelpunktmessen bestimmt wird.

Bezüglich einer Berücksichtigung von aktuell vorliegenden Messbedingungen kann im Rahmen des Vermessungsverfahrens erfindungsgemäss eine atmosphärische Zustandsinformation erfasst werden und/oder eine geometrische Messinformation definiert sein, insbesondere in Form von meteorologischen Daten oder Messachsenfehler, insbesondere Umgebungstemperatur, Luftdruck und/oder Luftfeuchtigkeit.

Insbesondere wird in diesem Zusammenhang bei dem Bestimmen der Entfernung für die jeweiligen Scanpunkte und/oder bei dem Bestimmen der Entfernung zu dem mindestens einen Referenzpunkt die atmosphärische Zustandsinformation und/oder geometrische Messinformation verarbeitet und basierend darauf erfolgt eine Entfernungskorrektur für das Bestimmen der jeweiligen Entfernung. Alternativ oder zusätzlich können die im Rahmen des Scannens bestimmten Scanpunkte bezüglich deren Position in dem äusseren Koordinatensystem, insbesondere die Orientierung der Punktwolke in dem inneren Koordinatensystem, basierend auf den atmosphärischen Zustandsinformationen und/oder geometrische Messinformation angepasst werden.

Mit anderen Worten kann bei einem Messvorgang (Einzelpunktmessen oder Scannen) eine derartige Zustandsinformation miterfasst werden und basierend auf dieser Information eine Messkorrektur vorgenommen werden. Die Korrektur kann dabei z.B. mittels einer "Look-Up Table", durch die z.B. für eine bestimmte Umgebungstemperatur ein zugehöriger Korrekturwert definiert ist, ermittelt werden.

Gemäss einer weiteren speziellen Ausführungsform der Erfindung werden mindestens ein weiteres Scannen von weiteren Scanpunkten ausgeführt, eine die weiteren Scanpunkte aufweisende weitere Punktwolke in einem weiteren Koordinatensystem abgeleitet, ein geodätisch genaues Einzelpunktmessen zu dem mindestens einem Referenzpunkt und/oder zu einem weiteren Referenzpunkt mit Bestimmen wenigstens der Richtung zu dem Referenzpunkt und/oder zu dem weiteren Referenzpunkt in dem weiteren Koordinatensystem ausgeführt und das weitere Koordinatensystem gegenüber dem äusseren Koordinatensystem basierend zumindest auf der bestimmten Richtung zu dem Referenzpunkt in dem weiteren Koordinatensystem referenziert. Diese beiden Schritte des weiteren Scannens und des Einzelpunktmessens erfolgen insbesondere in identischer Aufstellung des Vermessungsgeräts, so dass einem Scanvorgang ein bestimmter Einzelpunktmessvorgang zugeordnet werden kann.

Das Scannen und das mindestens eine weitere Scannen erfolgen dabei insbesondere aus unterschiedlichen Perspektiven von unterschiedlichen Aufstellpunkten aus, wobei die Orientierungen (oder Lagen) der jeweiligen Punktwolken in dem äusseren Koordinatensystem und dadurch die Orientierungen der jeweiligen Punktwolken relativ zueinander bestimmt sind.

Mit dieser erfindungsgemässen Verfahrensvariante können beispielsweise mehrere Punktwolken von einem oder mehreren Objekten aus unterschiedlichen Perspektiven erfasst werden und diese Punktwolken gegenseitig so referenziert werden bzw. in einem äusseren Koordinatensystem registriert werden, dass diese in einem gemeinsamen Koordinatensystem vorliegen. Beispielsweise werden alle Punktwolken in einem gemeinsamen übergeordneten System referenziert, so dass für jede Punktwolke die relative Lage und Skalierung in diesem System definiert ist.

Dadurch können z.B. die räumliche Ausdehnung und/oder die Form eines aus mehreren Perspektiven erfassten Objekts genau rekonstruiert werden und ein wirklichkeitsgetreues Modell für das Objekt basierend auf den erzeugten Punktwolken erstellt werden.

Das von unterschiedlichen Aufstellpunkten ausgehende Scannen (und das damit verbundene jeweilige Referenzieren der dadurch erzeugten Punktwolke) kann mit einem Vermessungsgerät und wechselndem Aufstellen des Geräts an diesen Aufstellpunkten erfolgen. Alternativ können hierfür mehrere geodätische Vermessungsgeräte an den unterschiedlichen Aufstellpunkten eingesetzt werden.

Bezüglich einer Genauigkeitssteigerung der für die Scanpunkte bestimmten Positionen erfolgt gemäss einer speziellen Ausführung der Erfindung basierend auf dem Referenzieren des inneren Koordinatensystems und des weiteren Koordinatensystems gegenüber dem äusseren Koordinatensystem ein zumindest teilweises, gegenseitiges Anpassen von Positionen der bestimmten Scanpunkte und/oder der weiteren Scanpunkte im äusseren Koordinatensystem, insbesondere erfolgt eine Positionskorrektur. Erfindungsgemäss wird das geodätische Vermessungsverfahren durch und mit dem geodätischen Vermessungsgerät ausgeführt, wobei das Vermessungsgerät zumindest eine Scanfunktionalität zum scannenden Erfassen der Scanpunkte und Erzeugen der Punktwolke und eine Einzelpunktmessfunktionalität zum hochpräzisen Richtungsbestimmen zu dem Referenzpunkt aufweist. Insbesondere ist das Vermessungsgerät zur Ausführung des Vermessungsverfahrens gemäss einer der im Folgenden angeführten Ausführungsformen ausgebildet. Die Verfahrensschritte Scannen, Einzelpunktmessen und Referenzieren werden erfindungsgemäss alle mit dem Vermessungsgerät (insbesondere bezüglich dem Scannen und Einzelpunktmessen) und direkt auf dem Vermessungsgerät (insbesondere bezüglich dem Referenzieren) durchgeführt. Die Erfindung betrifft auch ein geodätisches Vermessungsgerät, ausgebildet als Totalstation, mit einer eine Schwenkachse definierenden Basis, einem auf der Basis angeordneten, um die Schwenkachse relativ zur Basis motorisiert schwenkbaren Aufbau, wobei der Aufbau eine im wesentlichen orthogonal zur Schwenkachse stehende Kippachse definiert, und mit einer Anzieleinheit, ausgebildet als Ziel-Fernrohr, wobei die Anzieleinheit um die Kippachse relativ zum Aufbau schwenkbar angeordnet ist und eine Emissionseinheit mit einer Strahlquelle zur Erzeugung und Emission einer Messstrahlung aufweist. Zudem verfügt das Vermessungsgerät über eine Entfernungsmessfunktionalität zur Messung von Entfernungen zu Punkten, über eine Winkelmessfunktionalität zur Messung einer Ausrichtung der Messstrahlung und über eine Steuerungs- und Verarbeitungseinheit zur Datenverarbeitung und zur Steuerung des Vermessungsgeräts.

Des Weiteren verfügt das Gerät über eine Einzelpunktmessfunktionalität, wobei die Einzelpunktmessfunktionalität durch die Steuerungs- und Verarbeitungseinheit derart ausführbar ist, dass durch ein hochpräzises Ausrichten der Messstrahlung auf mindestens einen Referenzpunkt dieser geodätisch genau vermessbar ist, wobei durch den mindestens einen Referenzpunkt ein Positionsbezug zu einem äusseren Koordinatensystem bereitstellt wird, und dass bei der Ausrichtung der Messstrahlung auf den mindestens einen Referenzpunkt zumindest eine Richtung zu dem Referenzpunkt in dem inneren Koordinatensystem des Vermessungsgeräts bestimmbar ist.

Mit anderen Worten wird bei Ausführung der Einzelpunktmessfunktionalität automatisch gesteuert durch die Steuerungs- und Verarbeitungseinheit die Messstrahlung hochpräzise auf mindestens einen (scanpunktunabhängigen) Referenzpunkt ausgerichtet, wobei durch den mindestens einen Referenzpunkt ein Positionsbezug zu einem äusseren Koordinatensystem bereitstellt wird, insbesondere wobei eine absolute Position des Referenzpunkts in einem äusseren Koordinatensystem bekannt ist, der Referenzpunkt geodätisch genau vermessen wird und zumindest eine Richtung zu dem Referenzpunkt in dem inneren Koordinatensystem bestimmt wird.

Erfindungsgemäss ist das Vermessungsgerät ferner mit einer referenzpunktunabhängige Scanfunktionalität ausgerüstet, wobei die Steuerungs- und Verarbeitungseinheit ausgebildet ist, die Scanfunktionalität derart automatisch auszuführen, dass durch ein fortlaufendes Ausrichtungsändern der Messstrahlung auf innerhalb eines bestimmten Scanbereichs liegende Scanpunkte die Scanpunkte mit einer vorbestimmten Scanpunktauflösung automatisch vermessen werden und eine die Scanpunkte aufweisende Punktwolke in einem inneren Koordinatensystem des Vermessungsgeräts erzeugt wird. Ein Ändern der Ausrichtung der Messstrahlung erfolgt dabei fortlaufend, insbesondere kontinuierlich, so dass die Scannpunkte innerhalb des Scanbereichs dadurch sukzessive abtastbar sind.
Mit anderen Worten erfolgt bei Ausführung der Scanfunktionalität automatisch gesteuert durch die Steuerungs- und Verarbeitungseinheit ein Scannen mit einem fortlaufenden Ändern der Ausrichten der Messstrahlung auf innerhalb eines bestimmten Scanbereichs liegende Scanpunkte und einem Vermessen der Scanpunkte mit einer vorbestimmten Scanpunktauflösung und einem Erzeugen einer die Scanpunkte aufweisenden Punktwolke in einem inneren Koordinatensystem des Vermessungsgeräts.
Das Vermessungsgerät weist zusätzlich eine Referenzierungsfunktionalität auf, bei deren Ausführung durch die Steuerungs- und Verarbeitungseinheit ein Referenzieren des inneren Koordinatensystems gegenüber dem äusseren Koordinatensystem basierend zumindest auf dem durch den Referenzpunkt bereitgestellten Positionsbezug zu dem äusseren Koordinatensystem und der durch die Einzelpunktmessfunktionalität bestimmbaren Richtung zu dem Referenzpunkt in dem inneren Koordinatensystem so erfolgt, dass zumindest eine Orientierung der Punktwolke im äusseren Koordinatensystem bestimmt ist.

Gemäss einer speziellen, erfindungsgemässen Ausführungsform des Vermessungsgeräts ist die Steuerungs- und Verarbeitungseinheit derart konfiguriert, dass mit dem geodätischen Vermessungsgerät ein oben beschriebenes geodätisches Vermessungsverfahren ausführbar ist.

Für eine verbesserte Benutzerfreundlichkeit kann das Vermessungsgerät insbesondere eine Fernsteuereinheit mit einer Auswerteeinheit aufweisen, wobei die Referenzierungsfunktionalität durch die Auswerteeinheit ausführbar ist und/oder eine Anzeigeeinheit zur Darstellung von Messinformation aufweisen, insbesondere wobei ein Scanfortschritt durch ein zumindest teilweises Darstellen von Scanpunkten einer Punktwolke darstellbar ist.

Zur Erfassung weiterer positionsrelevanter Informationen verfügt das erfindungsgemässe Vermessungsgerät in einer speziellen Ausbaustufe über ein GNSS-Modul zur Erfassung von GNSS-Positionsinformation, insbesondere wobei die GNSS-Positionsinformation zur Positionskorrektur der Scanpunkte und/oder der Punktwolke im äusseren Koordinatensystem und/oder zur Messwertanpassung bei der Scanpunktvermessung und/oder Referenzpunktvermessung verarbeitbar ist.

Eine solche GNSS-Information kann beispielsweise verwendet werden um ein so genantes "Smart-Station Setup" auszuführen, d.h. dass beispielsweise die Richtung zu einem Anschlusspunkt mit einem Vermessungsgerät ("Smart-Station") gemessen wird, jedoch die Koordinaten dieses angemessenen Punkts (noch) nicht bekannt sind. Die Position des Punkts wird erst bekannt durch ein nachfolgendes Positionieren des Vermessungsgeräts auf dem Anschlusspunkt, wobei mittels GNSS eine Positionsbestimmung an diesem Punkt erfolgt. Sobald dieser Punkt dadurch bekannt ist, wird die Orientierung des ersten Setups (also bei Anzielung des Anschlusspunkts) durch Berücksichtigen der ermittelten Punktposition berechnet und aktualisiert. Dabei kann entsprechend auch eine in der ersten Aufstellung erzeugte Punktwolke aktualisiert werden.

Das Vermessungsgerät kann insbesondere derart ausgebildet sein, dass die Anzieleinheit über ein Abbildungssystem mit einer eine Fokussiergruppe aufweisenden Abbildungsoptik und einer Bildebene zur Erzeugung und graphischen Bereitstellung einer Abbildung eines Anzielsichtfeldes verfügt, insbesondere wobei das Anzielsichtfeld durch das Abbildungssystem definiert ist und die Abbildung des Anzielsichtfeldes in der Bildebene mittels einer Abbildungsfokussierung durch die Fokussiergruppe graphisch scharf bereitstellbar ist.

Die Erfindung betrifft ausserdem ein Computerprogrammprodukt mit Programmcode, der auf einem maschinenlesbaren Träger gespeichert ist. Das Computerprogrammprodukt ist zur Steuerung des Scannens und des Einzelpunktmessens und zur Durchführung des Referenzierens des inneren Koordinatensystems gegenüber dem äusseren Koordinatensystem gemäss einem oben beschrieben geodätischen Vermessungsverfahren konfiguriert, insbesondere wenn das Programm auf einer als Steuerungs- und Verarbeitungseinheit eines erfindungsgemässen Vermessungsgeräts oder auf einer als Auswerteeinheit eines erfindungsgemässen Vermessungsgeräts ausgebildeten elektronischen Datenverarbeitungseinheit ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: ein erfindungsgemässes Vermessungsgerät, ein zu erfassendes Objekt und Referenzpunkte angebende Ziele;
- Fig.2: zwei erfindungsgemässe geodätische Vermessungsgeräte und das Erfassen eines Objekts aus unterschiedlichen Perspektiven;
- Fig.3a-c: jeweilige im Rahmen eines Scannens bzw. erfindungsgemässen Referenzierens erzeugte Punktwolken für ein Objekt; und
- Fig.4: ein Ablaufdiagramm für einen erfindungsgemässen Messvorgang.

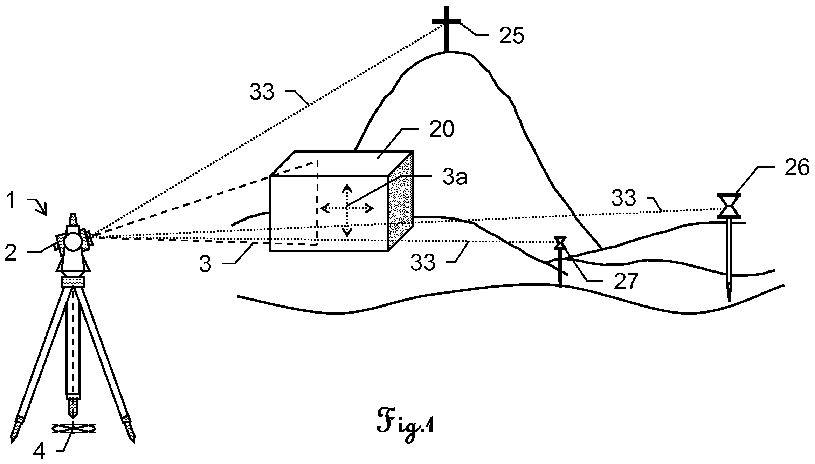

Fig. 1 zeigt ein erfindungsgemässes Vermessungsgerät 1, insbesondere ausgestaltet als Totalstation oder Multistation, mit einer Basis, einer Stütze, die um eine Schwenkachse relativ zur Basis schwenkbar ist, und eine um zwei Achsen - Schwenk- und Kippachse - schwenkbaren Anzieleinheit 2, wobei die Kippachse durch die Stütze definiert ist. Zudem sind ein zu vermessendes Objekt 20, zwei Retroreflektoren 26,27 und ein Gipfelkreuz 25 auf einer Anhöhe gezeigt.

Eine Multistation verfügt über die typischen Funktionalitäten einer Totalstation und weist zudem eine schnelle und hochgenaue Scannfunktionalität auf, wobei im Wesentlichen basierend auf verbesserten (schneller ansteuerbaren und schneller agierenden, leistungsfähigeren) Steuerungsmotoren eine schnellere und präzisere Ausrichtung der Anzieleinrichtung erzielt werden kann. Dadurch ist es möglich, eine Vielzahl von Punkten in einem vordefinierten Messbereich in relativ kurzer Zeit abzutasten und eine entsprechende Punktwolke mit den abgetasteten Punkten zu erzeugen. Z.B. können so 1000 Messpunkte pro Sekunde während des Änderns der Ausrichtung der Messstrahlung (zum Abtasten des Objekts 20) erfasst werden. Dieser Abtastvorgang kann aufgrund der erreichbaren Messgenauigkeit (Genauigkeit im Rahmen einer (hinsichtlich der Messdauer) entsprechenden geodätisch genauen Einzelpunktvermessung) in Verbindung mit der hohen Messgeschwindigkeit und der damit realisierbaren Scanpunktauflösung als echtes Scannen bezeichnet werden.

Das Vermessungsgerät 1 verfügt über eine Scanfunktion, bei deren Ausführung Scanpunkte innerhalb eines vorbestimmten Scanbereichs (der Scanbereich entspricht hier im Wesentlichen der aus der Aufstellung des Geräts sichbaren räumlichen Ausdehnung des Objekts) gemessen werden und eine eine Objektoberflächeninformation repräsentierende Punktwolke mit den vermessenen Scanpunkten erzeugt wird. Das Scannen erfolgt hierbei durch ein sukzessives und fortlaufendes Ausrichten der Anzieleinheit derart, dass die Scanpunkte nacheinander abgetastet und vermessen werden. Für jeden Scanpunkt werden dabei eine Entfernung und eine Richtung zu dem jeweiligen Scanpunkt im inneren Bezugssystem des Geräts 1 bestimmt, d.h. ein Schwenkwinkel, der die relative Lage der Stütze zu der Basis angibt, und ein Kippwinkel, der die Lage der Anzieleinheit 2 relativ zu der Stütze angibt. Entsprechend sind eine Entfernungs- und eine Winkelmessfunktionalität vorgesehen.

Für die Entfernungsmessung wird eine Messstrahlung 3 mittels der Anzieleinheit 2 emittiert und auf den Scanbereich ausgerichtet. Als Messstrahlung 3 wird typischerweise (kollimierte) Laserstrahlung, die durch eine an dem Vermessungsgerät 1 vorgesehene Laserdiode erzeugbar ist, verwendet. Die Messstrahlung 3 wird mittels Ausrichten der Anzieleinheit so geführt, dass der Scanbereich mit einer vorgegebenen Scanpunktauflösung abgerastert wird (siehe Pfeile 3a).

Erfindungsgemäss ist das Vermessungsgerät 1 derart ausgestaltet, dass - je nach gewünschter Scanpunktauflösung und Entfernung zum zu vermessenden Objekt 20 - bei einem solchen Scannen beispielsweise 250 oder 1000 Scanpunkte pro Sekunde erfasst werden.

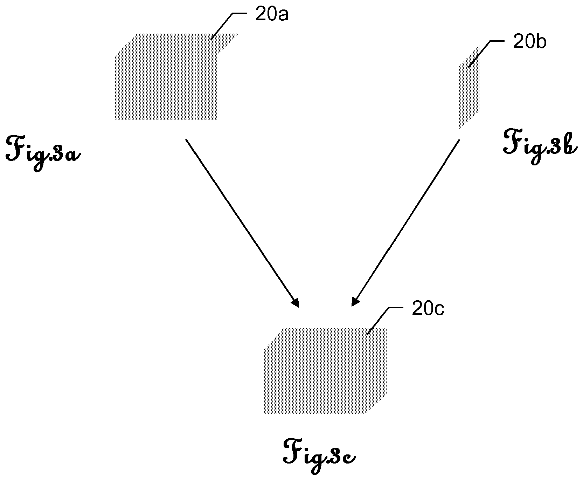

Als Resultat des Scanprozesses ergibt sich eine Punktwolke 20a (vgl. Fig. 3a), d.h. eine Vielzahl von Messpunkten, wobei für jeden Messpunkt eine jeweilige Richtung der Messstrahlung 3 und ein Entfernungswert bestimmt sind und dadurch die Koordinaten des jeweiligen Messpunkts im inneren Koordinatensystem des Messgeräts 1 bekannt sind. Die Punktwolke 20a umfasst dabei diejenigen Scanpunkte, die aus der Lage des Objekts 20 relativ zu dem Vermessungsgerät 1 erfassbar (für das Vermessungsgerät 1 sichtbar) sind.

Aus der Punktwolke 20a können beispielsweise die räumliche Ausdehnung und die Form des Objekts 20 abgeleitet werden. Zusätzlich kann für die Messpunkte jeweils ein Intensitätswert für die mit dem Vermessungsgerät 1 erfasste und am Objekt 20 reflektierte Messstrahlung 3 gemessen werden, wodurch zusätzliche Informationen über die Oberflächenbeschaffenheit des Objekts 20 abgeleitete werden können, beispielsweise eine Materialinformation.

Zudem kann die Punktwolke 20a basierend z.B. auf einem zusätzlich erfassten Panoramabild der gescannten Messumgebung koloriert werden (z.B. basierend auf den RGB-Werten des entsprechend erfassten Bildes). Zusätzliche Bildinformation kann somit der Punktwolke 20a überlagert werden.

Mittels der Punktwolke 20a können somit Informationen für das Objekt 20 erzeugt werden, jedoch ist dadurch keine verlässliche und präzise Aussage über eine (relative) räumliche Position und/oder Ausrichtung des Objekts 20 ableitbar. Für eine räumliche Lagebestimmung des Objekts 20 (bzw. der Punktwolke 20a) bzw. für eine Lagebestimmung relativ zu anderen Objekten oder Koordinatensystemen muss ein Bezug zu einem äusseren Koordinatensystem (= anderes Koordinatensystem), das z.B. einen absoluten geodätischen Positionsbezug herstellbar macht, hergestellt werden.

Erfindungsgemäss verfügt das Vermessungsgerät 1 neben der Scanfunktionalität hierzu über eine Einzelpunktmessfunktionalität, in deren Rahmen ein geodätisch genaues Anzielen und Vermessen eines bestimmten einzelnen Zielpunkts (Referenzpunkts) durchführbar ist. Hierfür wird die Messstrahlung 33 zunächst präzise auf den zu vermessenden Punkt ausgerichtet. Bei dieser Einzelpunktmessung bleibt die Messstrahlung 33 in einer definierten Ausrichtung auf den jeweiligen genau zu messenden Punkt, während bei dem Scannen die Ausrichtung der Messstrahlung 33 fortlaufend verändert wird. Dieses Ausrichten erfolgt insbesondere manuelle durch den Benutzer, wobei der Benutzer durch ein in der Anzieleinheit 2 vorgesehenes Teleskop den Zielpunkt mittels eines Fadenkreuzes optisch genau anzielen kann, oder durch eine automatische Ziel-Erkennungs-Funktion (ATR: "Automatic Target Recognition"), wobei ein Auftreffpunkt der reflektierten Messstrahlung 33 auf einem positionssensitiven Detektor erfasst wird und basierend darauf eine motorisierte, gesteuerte Ausrichtung erfolgt.

Durch das Anzielen von drei Referenzzielen (Retroreflektor 26,27 und Gipfelkreuz 25), deren Koordinaten in dem äusseren Koordinatensystem bekannt sind und die als Referenzpunkte dienen, kann das Vermessungsgerät 1 in das äussere Koordinatensystem eingemessen werden (= die Position und Ausrichtung des Vermessungsgeräts 1 wird in dem äusseren Koordinatensystem bestimmt) und dadurch eine Positions- und/oder Orientierungsbeziehung zwischen dem inneren Koordinatensystem (bzw. der Punktwolke 20a) und dem äusseren Koordinatensystem bestimmt werden.

Das Vermessungsgerät 1 verfügt dafür über eine entsprechende Referenzierungsfunktionalität. Dabei liegt das Vermessungsgerät 1 für das Vermessen der drei Referenzziele 25-27 und für den Scanvorgang in der gleichen Aufstellung vor, d.h. zwischen dem Scan- und Einzelpunktmessvorgang wird das Vermessungsgerät 1 nicht versetzt. Für das präzise Einmessen mit drei bekannten Referenzpunkten 25-27 ist das Bestimmen der jeweiligen Richtung zu den Referenzpunkten 25-27, d.h. der jeweiligen Schwenk- und Kippwinkel, ohne eine zusätzliche Entfernungsmessung zu den Referenzen 25-27 ausreichend, jedoch kann beispielsweise für eine genauere Positionsbestimmung des Vermessungsgeräts 1 im äusseren Koordinatensystem zusätzlich die Entfernung bestimmt werden.

Durch das hochpräzise Einmessen ist damit beispielsweise ein gemeinsamer Punkt für beide Koordinatensysteme, insbesondere der Aufstellpunkt 4 des Vermessungsgeräts 1, und eine jeweilige Orientierung des Systems bekannt. Damit kann eine Referenzierung des inneren Koordinatensystems gegenüber dem äusseren Koordinatensystem erfolgen, z.B. durch Rotation, Translation und/oder Skalierung des inneren Koordinatensystems, und z.B. eine entsprechende Koordinatentransformation für die Punktwolke 20a durchgeführt werden.

Falls mit dem Vermessungsgerät 1 bereits Referenzmessungen durchgeführt wurden und dadurch die Aufstellung (Setup) des Geräts 1 definiert ist, können die mittels des Scannens erzeugten Punktwolken direkt in Bezug auf das äussere (absolute) Koordinatensystem erzeugt werden.

Für den Fall, dass beispielsweise der Aufstellpunkt 4 für die Positionierung des Vermessungsgeräts 1 bekannt ist, genügt für das Einmessen eine einzelne Messung zu einem bekannten Punkt 25-27, wodurch die Richtung zu diesem Punkt und damit eine Ausrichtung des Vermessungsgeräts 1 bestimmbar sind.

Bei der Verwendung eines ersten und eines zweiten Vermessungsgeräts 1, genügt für das Einmessen des zweiten Vermessungsgeräts 1 eine gegenseitige Anzielung der Vermessungsgeräte 1, wobei für das erste Gerät 1 der Aufstellpunkt 4 und die räumliche Orientierung in dem äusseren Koordinatensystem bekannt ist.

Neben den oben beschriebenen bzw. skizzierten Einmessroutinen kann ein Einmessen des geodätischen Vermessungsgeräts 1 nach alternativen, aus dem Stand der Technik bekannten Methoden erfolgen.

Die Scanauflösung und damit die erreichbare Genauigkeit für die Positionsbestimmung bei der Vermessung von Punkten beim Scannen sind verfahrensbedingt deutlich geringer als die erreichbare Genauigkeit bei einer geodätischen Einzelpunktmessung. Bei einem Scan wird der Messstrahl 3 im Wesentlichen fortlaufend bewegt, wodurch eine Messdauer für jeden einzelnen Punkt deutlich limitiert ist. Insbesondere wird dabei für jeden Messpunkt über eine bestimmte Messzeit (abhängig von der gewünschten Auflösung) integriert, wobei der Messstrahl 3 bewegt wird. Hingegen wird bei der Einzelpunktmessung der Messstrahl 33 genau auf das Ziel ausgerichtet und in dieser Ausrichtung gehalten. Damit kann durch das erfindungsgemässe Registrieren (Referenzieren) der Punktwolke 20a in dem äusseren Koordinatensystem durch das Einzelpunktmessen eine deutlich grössere Genauigkeit erzielt und damit die Lage der Punktwolke 20a in dem äusseren Bezugssystem wesentlich präziser bestimmt werden - verglichen mit einer Registrierung, die auf gemessenen Scanpunkten basiert.

Vorteilhaft ist dabei zudem, dass die Registrierung der Punktwolke 20a direkt auf und mit dem Vermessungsgerät 1 erfolgt und dafür keine zeitaufwändige Datenübertragung auf ein speziell für diesen Zweck ausgebildetes separates Computersystem erforderlich ist. Ferner kann der Benutzer dadurch einen Gesamt-Scanfortschritt auch bei der Messung mehrerer Punktwolken aus unterschiedlichen Aufstellungen des Vermessungsgeräts 1 verfolgen.

Für die Registrierung der Punktwolke 20a ist es ausserdem unerheblich, ob diese Registrierung (bzw. das Einmessen des Vermessungsgeräts 1 in das äussere Koordinatensystem) vor dem Scannen und Erfassen der Punktwolke 20a für das Objekt 20 oder nach dem Scannen erfolgt. Die Punktwolke 20a kann also auch nach deren Erzeugung noch hinsichtlich ihrer räumlichen Lage oder Orientierung in dem äusseren Koordinatensystem referenziert werden.

Durch die ausführbare Einzelpunktvermessung können für das Registrieren der Punktwolke Referenzziele 25-27 in grösseren Entfernungen (z.B. Gipfelkreuz 25) mit geodätischer Genauigkeit vermessen werden als dies im Rahmen eines Scanprozesses möglich ist. Dadurch wird ein wesentlich genaueres Referenzieren der Punktwolke in dem äusseren Koordinatensystem realisiert.

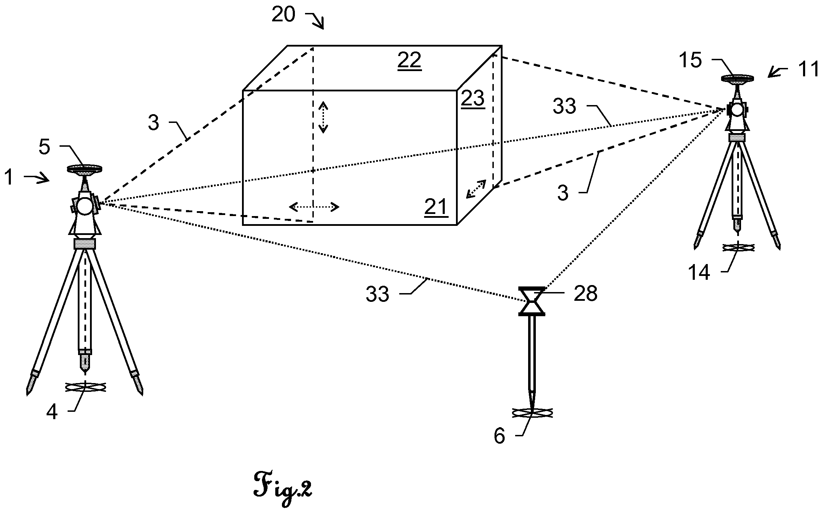

Fig. 2 zeigt zwei erfindungsgemässe geodätische Vermessungsgeräte 1,11 (Multistations), ein zu vermessendes Objekt 20 und einen Retro-Reflektor 28. Mit dem Einsatz von mehreren Vermessungsgeräten 1,11 kann z.B. das Objekt 20 aus unterschiedlichen Perspektiven erfasst werden bzw. es kann ein grösserer Messbereich abgedeckt werden.

Das Objekt 20 wird in einer ersten Aufstellung des ersten Vermessungsgeräts 1 (= Positionierung des Geräts 1 an einem ersten Aufstellpunkt 4) abgetastet und eine entsprechende erste Punktwolke 20a (vgl. Fig. 3a) wird erzeugt. Die Punktwolke 20a besteht hierbei aus Scanpunkten, die auf den Flächen 21,22 des Objekts 20 mit dem Vermessungsgerät 1 erfasst wurden. Die Oberfläche 23 des Objekts 20 kann ausgehend von der Aufstellposition 4 nicht angezielt oder abgetastet werden.

Mit dem zweiten Vermessungsgerät 11 wird das Objekt 20 aus einer zweiten Aufstellposition 14 gescannt. Bei dem Scanvorgang mit der zweiten Vermessungseinheit wird die Fläche 23 des Objekts 20 erfasst und eine entsprechende Punktwolke 20b (vgl. Fig. 3b) erzeugt, wobei die beiden Flächen 21,22 aus der Perspektive des zweiten Geräts 11 nicht mit der Messstrahlung 3 anzielbar sind.

Die beiden Punktwolken 20a-b liegen damit zunächst in zwei unterschiedlichen, dem jeweiligen Vermessungsgerät 1,11 zugeordneten, inneren Koordinatensystemen vor. Es existiert kein relativer Bezug der beiden Punktwolken 20a-b zueinander.

Zur Erlangung einer gemeinsamen Punktwolke 20c (vgl. Fig. 3c), die sowohl die Flächen 21,22 als auch die Fläche 23 des Objekts 20 positionstreu repräsentiert, werden die beiden Punktwolken 20a-b gegenseitig in Bezug gesetzt. Gemäss der Erfindung kann die Referenzierung der Punktwolken 20a-b in ein gemeinsames Koordinatensystem dadurch erzielt werden, dass das erste Vermessungsgerät 1 (als Referenzpunkt) von dem zweiten Gerät 11 im Rahmen einer Einzelpunktvermessung hochpräzise angezielt wird und dabei eine Entfernung zwischen den Geräten 1,11 und eine Ausrichtung des zweiten Geräts 11 erfasst wird. Zudem wird das zweite Gerät 11 von dem ersten entsprechend angezielt (dargestellt durch die jeweils emittierte und empfangbare Messstrahlung 33). Dadurch ist die relative Positionierung und Ausrichtung der Vermessungsgeräte 1,11 (und damit auch der inneren Koordinatensysteme) bekannt und die beiden Punktwolken 20a-b können in ein gemeinsames Koordinatensystem übertragen (z.B. in das Koordinatensystem des ersten Vermessungsgeräts, welches dabei als äusseres Koordinatensystem zu betrachten ist) bzw. gegenseitig referenziert werden (mittel der erfindungsgemässen Referenzierungsfunktionalität).

Durch die erfindungsgemässe Referenzierung können die Punktwolken 20a-b derart relativ miteinander verknüpft werden und deren Scanpunkte zu einer Gesamt-Punktwolke 20c zusammengefasst werden, dass durch diese zusammengesetzte Punktwolke 20c das Objekt 20 weitgehender repräsentiert wird, als nur durch eine der Punktwolken 20a-b.

Die beiden Vermessungsgeräte 1,11 können zudem jeweils einen GNSS-Empfänger 5,15 aufweisen, durch den jeweils eine Positionsinformation eines Satellitensystems empfangen werden kann (z.B. GPS-Signale, GLONASS-Signale oder Galileo-Signale). Mittels dieser Positionsinformation kann für jedes der Vermessungssysteme 1,11 eine absolute Position im Erdkoordinatensystem bestimmt werden, wobei durch die ebenfalls bestimmbare Ausrichtung (siehe oben: gegenseitiges Anzielen, jedoch genügt hierfür die Bestimmung Messrichtung) der Geräte 1,11 zudem die absolute Ausrichtung der Geräte bestimmbar ist (z.B. Nord-Ost-Ausrichtung). Mit diesen Informationen können die Punktwolken 20a-c in diesem äusseren Koordinatensystem (Erdkoordinatensystem) registriert werden. Die Lagen der Punktwolken 20a-c und auch die Lage (Position und Ausrichtung) des Objekts 20 lassen sich so in diesem System bestimmen. Es können als absolute Koordinaten - von den inneren Koordinatensystemen der Vermessungsgeräte 1,11 unabhängige Koordinaten - für das Objekt 20 abgeleitete werden.

Alternativ zur Verwendung der beiden Vermessungsgeräte 1,11 kann ein einzelnes Vermessungsgerät an den beiden Aufstellpunkten 4,14 nacheinander aufgestellt werden und damit jeweils das Objekt 20 gescannt und die Punktwolken 20a-b erzeugt werden. Für jede Aufstellung des Vermessungsgeräts erfolgt dann eine erfindungsgemässe Referenzierung der jeweiligen erstellten Punktwolke 20a-b gegenüber einem übergeordneten Koordinatensystem, z.B. durch präzises Einzelanmessen des Reflektors 28, dessen Position 6 in diesem übergeordneten Koordinatensystem bekannt ist (bei jeweils bekannter Aufstellposition 4,14). Beide Punktwolken 20a-b können damit in einem gemeinsamen Koordinatensystem referenziert werden.

Bei nicht bekannten Positionen der Aufstellpunkte 4,14 kann ein Einmessen in ein äusseres Koordinatensystem dadurch erfolgen, dass neben dem einem positionsmässig bekannten Ziel 28 noch weitere Ziele (nicht dargestellt), deren Positionen ebenfalls in dem äusseren Koordinatensystem bekannt sind, mittels der Einzelpunktmessfunktionalität vermessen werden - zumindest bezüglich der Richtung zu diesen Zielen.

Ferner können Punktwolken erzeugt und gegenseitig referenziert werden bzw. in einem gemeinsamen Koordinatensystem registriert werden, indem eine erste Punktwolke in der ersten Aufstellposition gescannt wird und in dieser Aufstellung ein Reflektor in einer zweiten Position mit der Einzelpunktmessfunktionalität exakt vermessen wird. Anschliessend werden die Aufstellpositionen von Reflektor und Vermessungsgerät getauscht, eine weitere Punktwolke abgetastet und der Reflektor präzise mittels Einzelpunktmessung angemessen und dadurch die relative Position des Vermessungsgeräts zum Reflektor bestimmt.

Durch ein Wiederholen dieser Schritte, also ein Aufstellen und ein präzises Vermessen des Reflektors an einer dritten Position und ein Tauschen der Position des Vermessungsgeräts mit dem Reflektor (an der dritten Position) und ein weiteres solches "Rückwärtsmessen", kann eine Abfolge von zueinander referenzierten Messungen ("Polygonzug") erzeugt werden. Die dabei erzeugten Punktwolken können damit in einem gemeinsamen Koordinatensystem bereitgestellt und/oder angezeigt - z.B. auf einem Display des Vermessungsgeräts - werden. Durch ein zusätzliches Referenzieren gegenüber einem äusseren Koordinatensystem (z.B. gegenüber den Erdkoordinaten) kann zudem eine Lage der Punktwolken in diesem Koordinatensystem berechnet werden, d.h. die absolute Lage der Punktwolken (und dadurch repräsentierter Objekte) im Erdkoordinatensystem ist bestimmt.

Mit dieser Methode kann ein Überbrücken von Geländebereichen erfolgen, in denen nur schwer messbare bzw. keine bekannten Referenzpunkte vorliegen. Ein Polygonzug (Traverse) wird dann an einem ersten bekannten Referenzpunkt begonnen und weitere Überbrückungspunkte mittels des Vermessungsgeräts und Vermessen der Position eines Retroreflektors relativ zum Vermessungsgerät bereitgestellt. An diesen künstlich bereitgestellten Punkten kann eine Folgemessung angeknüpft werden. Ein solcher Polygonzug wird durch Vermessen eines weiteren bekannten, letzten Punkts abgeschlossen. Dabei können alle im Zuge der Überbrückung künstlich bereitgestellten Referenzpunkte basierend auf der bekannten Position des letzten Punkts hinsichtlich deren Positionen aktualisiert werden. Entsprechend kann auch ein korrigieren der Lagen von im Rahmen des Polygonzugs erstellten Punktwolken erfolgen.

Bei einem Erstellen mehrerer zueinander referenzierter Messungen, z.B. im Rahmen eines Polygonzuges, können die dabei erzeugten Messwerte der einzelnen Punktwolken für eine gegenseitige Anpassung herangezogen werden. D.h. wenn sich gegenseitig überlappende Messbereiche durch Scannen erfasst wurden, können jeweilige mehrmals vermessene Punkte durch ein Vergleichen, insbesondere Mittelwertbilden, der zugehörigen Messwerte bestimmt werden, nachdem die jeweiligen Punktwolken erfindungsgemäss mittels Referenzpunktmessen (Einzelpunktmessen) gegenseitig referenziert wurden und die Messpunkte koordinativ im gleichen Koordinatensystem bekannt sind.

Des Weiteren kann bei der Verwendung mehrere Multistations (hier nicht gezeigt), mit denen jeweils eine Messung und Erstellung einer Punktwolke erfolgt und eine Orientierung zu einem Referenzpunkt bestimmt wird, bei einer Aktualisierung bzw. Anpassung der Koordinaten des Referenzpunkts ein jeweiliges Koordinatenaktualisierung für alle mit den Multistations erfasste Punktwolken so erfolgen, dass diese aktualisiert in einem gemeinsamen Koordinatensystem vorliegen.

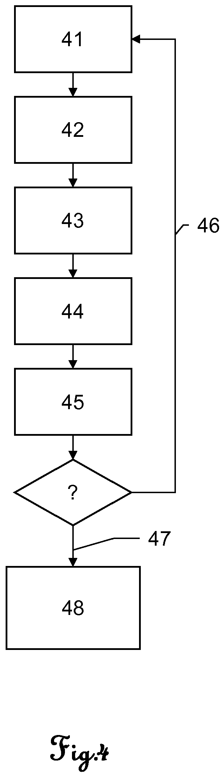

Fig. 4 zeigt ein Ablaufdiagramm für einen Messprozess mit Scannen und Registrieren der bei dem Scannen erzeugten Punktwolke in einem Koordinatensystem gemäss der Erfindung.

Zunächst wird in einem ersten Schritt 41 ein geodätisches Vermessungsgerät, das sowohl zum Scannen von Objekten als auch zum hochpräzisen Vermessen eines einzelnen Punktes ausgebildet ist (z.B. Multistation), in einer ersten Aufstellung (Setup) aufgestellt.

Anschliessend wird durch ein einzelnes, geodätisch genaues Vermessen von Referenzpunkten ein den Messanforderungen entsprechendes Einmessen des Vermessungsgeräts in ein äusseres Koordinatensystem vorgenommen (Schritt 42), wobei beispielsweise bekannte Punkt (d.h. Punkt mit bekannter Position in dem äusseren Koordinatensystem) angemessen werden. Die Messreichweite für ein solches Einzelpunktmessen ist deutlich grösser als eine erzielbare Messreichweite für ein Scannen, da die Messstrahlung präzise auf den Messpunkt ausgerichtet wird und während der gesamten Messung gehalten wird und damit eine längere Messdauer - also eine temporal längere Integrationsperiode - für einen Punkt erreichbar ist.

Danach wird in einem weiteren Schritt 43 ein Scanbereich definiert, innerhalb welchem Scanpunkte mit einer ebenfalls zu bestimmenden Punkt-zu-Punkt-Auflösung erfasst werden sollen. Hierfür kann z.B. eine Geschwindigkeit für die Ablenkung des Messstrahls und/oder eine Integrationszeit hinsichtlich der Messdauer für jeden Scanpunkt definiert werden.

Das Scannen 44 des Objekts erfolgt dann auf Basis der in Schritt 43 gesetzten Einstellungen durch Führen des Messstrahls über das Objekt innerhalb des definierten Scanbereichs und (gleichzeitigem) Messen von Winkel- und Entfernungswerten zu jedem Scanpunkt. Als Resultat des Scanvorgangs wird eine Punktwolke mit den Scanpunkten in einem inneren Koordinatensystem des Vermessungsgeräts erzeugt.

Nach erfolgtem Scannen 44 wird mittels der in Schritt 42 ermittelten Einmesswerte eine Referenzierung 45 der Punktwolke in dem äusseren Koordinatensystem ausgeführt, so dass zumindest die Orientierung, insbesondere auch die Lage, der Punktwolke im äusseren Koordinatensystem bekannt ist bzw. so dass ein Bezug zwischen dem inneren und äusseren Koordinatensystem bestimmt ist. Damit liegen Objektkoordinaten in diesem äusseren Koordinatensystem vor, d.h. eine räumliche Ausdehnung und eine Position und Orientierung des Objekts.

Die Schritte 43 und 44 können erfindungsgemäss vor Schritt 42 ausgeführt werden.

Nach erfolgtem Registrieren bzw. Referenzieren 45 der Punktwolke kann wahlweise das Vermessungsgerät zur Ausführung eines weiteren Scans in einer weiteren Aufstellung positioniert werden (Schritt 46), wobei in dieser weiteren Aufstellung wiederum die Schritte 42-45 ausgeführt werden, oder das Messvorgang abgeschlossen wird 47.

Als Resultat 48 des Messprozesses werden eine oder mehrere Punktwolken erhalten, wobei diese direkt im richtigen (gewünschten) Koordinatensystem - z.B. im Erdkoordinatensystem, falls die Positionen der Referenzpunkt darin bekannt sind - vorliegen, ohne dass ein zusätzlicher Nachbearbeitungsschritt (z.B. am Büroarbeitsplatz) für eine solche Registrierung durchgeführt werden muss.

Im Rahmen des Einzelpunktmessens oder Scannens können ferner atmosphärische Informationen, wie z.B. aktuell bei der jeweiligen Messung vorliegender Luftdruck, Temperatur und/oder Luftfeuchtigkeit, und deren Einfluss auf eine jeweilige Messung berücksichtigt werden.

Alternativ oder zusätzlich können geometrische Korrekturdaten (z.B. bezüglich einer Nord-Ausrichtung) bei den jeweiligen Messprozessen berücksichtigt werden.

Im Speziellen kann das erfindungsgemässe Referenzieren der Punktwolke mit einem anderen Koordinatensystem mittels eines Controllers des Vermessungsgeräts ausgeführt werden. Der Controller ist insbesondere zur Fernsteuerung des Geräts vorgesehen.

Es versteht sich, dass die dargestellten Figuren nur mögliche Ausführungsbeispiele schematisch darstellen. Die verschiedenen Ansätze können erfindungsgemäss ebenso miteinander sowie mit Verfahren und Vorrichtungen zur geodätischen Zielvermessung und mit Vermessungsgeräten, insbesondere Totalstationen oder Multistations, des Stands der Technik kombiniert werden.

## Patentansprüche

1. Geodätisches Vermessungsverfahren zum Referenzieren eines Koordinatensystems mittels eines geodätischen Vermessungsgeräts (1,11) nach Anspruch 11, mit
• einem Ableiten einer Oberflächeninformation für ein Objekt (20) bezüglich einem inneren Koordinatensystem des Vermessungsgeräts (1,11), insbesondere bezüglich einer Form und/oder räumlichen Ausdehnung des Objekts (20), und
• einem geodätisch genauen Einzelpunktmessen zu mindestens einem Referenzpunkt (25-28), wobei
□ durch den mindestens einen Referenzpunkt (25-28) ein Positionsbezug zu einem äusseren Koordinatensystem bereitgestellt wird,
□ eine Messstrahlung (3,33) präzise auf den mindestens einen Referenzpunkt (25-28) ausgerichtet wird und
□ bei der Ausrichtung der Messstrahlung (3,33) auf den mindestens einen Referenzpunkt (25-28) zumindest eine Richtung zu dem Referenzpunkt (25-28) in dem inneren Koordinatensystem bestimmt wird,
**gekennzeichnet durch**
• ein referenzpunktunabhängiges Scannen zum Ableiten der Oberflächeninformation, mit
□ einem automatischen Abtasten eines bezüglich dem Objekt (20) bestimmten Scanbereichs durch motorisiert geführtes, fortlaufendes Ausrichtungsändern der Messstrahlung (3,33),
□ einem Bestimmen von einer jeweiligen Entfernung und einer jeweiligen Ausrichtung der für eine Entfernungsmessung emittierten Messstrahlung (3,33) für innerhalb des bestimmten Scanbereichs liegende Scanpunkte, in einer vorbestimmten Scanpunktauflösung, und
□ einem Erzeugen einer die Oberflächeninformation repräsentierenden und die Scanpunkte aufweisenden Punktwolke (20a-c) in dem inneren Koordinatensystem, und
• ein derartiges Referenzieren, insbesondere automatisches Referenzieren, des inneren Koordinatensystems gegenüber dem äusseren Koordinatensystem basierend zumindest auf
□ dem durch den Referenzpunkt (25-28) bereitgestellten Positionsbezug zu dem äusseren Koordinatensystem und
□ der bestimmten Richtung zu dem Referenzpunkt (25-28) in dem inneren Koordinatensystem, dass zumindest eine Orientierung der Punktwolke (20a-c) im äusseren Koordinatensystem bestimmt ist.

2. Geodätisches Vermessungsverfahren nach Aspruch 1, **dadurch gekennzeichnet, dass**
eine absolute Position des mindestens einen Referenzpunkts (25-28) in dem äusseren Koordinatensystem bekannt ist und das Referenzieren basierend auf der bekannten absoluten Position des mindestens einen Referenzpunkts (25-28) erfolgt.

3. Geodätisches Vermessungsverfahren nach Anspruch 1 oder 2,
**dadurch gekennzeichnet, dass**
der mindestens eine Referenzpunkt (25-28) in dem äusseren Koordinatensystem bereitgestellt wird durch
• einen geodätisch referenzieren Einmesspunkt (25) oder
• einen Retro-Reflektor (26-28) oder
• ein in einer bekannten Positionierung oder Ausrichtung aufgestelltes geodätisches Vermessungsgerät (1,11).

4. Geodätisches Vermessungsverfahren nach einem der Ansprüche 1 bis 3,
**dadurch gekennzeichnet, dass**
eine Entfernung zu dem mindestens einen Referenzpunkt (25-28) und eine Position des Referenzpunkts (25-28) in dem inneren Koordinatensystem bestimmt werden und das Referenzieren basierend auf der bestimmten Position des Referenzpunkts (25-28) im inneren Koordinatensystem erfolgt.

5. Geodätisches Vermessungsverfahren nach einem der Ansprüche 1 bis 4,
**dadurch gekennzeichnet, dass**
• im Rahmen des Scannens bei dem Bestimmen der jeweiligen Entfernung und der jeweiligen Ausrichtung der Messstrahlung (3,33) die Ausrichtung der Messstrahlung (3,33) innerhalb des bestimmten Scanbereichs kontinuierlich verändert wird, und/oder
• im Rahmen des Referenzierens das innere Koordinatensystem derart angepasst wird, insbesondere hinsichtlich Lage und Skalierung des inneren Koordinatensystems, dass das innere Koordinatensystem mit dem äusseren Koordinatensystem zusammen fällt, insbesondere dem äusseren Koordinatensystem entspricht.

6. Geodätisches Vermessungsverfahren nach einem der Ansprüche 1 bis 5,
**dadurch gekennzeichnet, dass**
das Referenzieren des inneren Koordinatensystems gegenüber dem äusseren Koordinatensystem basierend auf weiteren Referenzinformationen erfolgt, insbesondere basierend auf einer zusätzlichen GNSS-Positionsinformation und/oder auf einem zusätzlichen dem inneren und äusseren Koordinatensystem gemeinsamen bekannten Punkt.

7. Geodätisches Vermessungsverfahren nach einem der Ansprüche 1 bis 6,
**dadurch gekennzeichnet, dass**
im Rahmen des Vermessungsverfahrens eine atmosphärische Zustandsinformation erfasst wird und/oder eine geometrische Messinformation definiert ist, insbesondere meteorologische Daten oder Messachsenfehler, insbesondere Umgebungstemperatur, Luftdruck und/oder Luftfeuchtigkeit, wobei
• bei dem Bestimmen der Entfernung für die jeweiligen Scanpunkte und/oder bei dem Bestimmen der Entfernung zu dem mindestens einen Referenzpunkt (25-28) die atmosphärische Zustandsinformation und/oder geometrische Messinformation verarbeitet wird und basierend darauf eine Entfernungskorrektur für das Bestimmen der jeweiligen Entfernung erfolgt und/oder
• die im Rahmen des Scannens bestimmten Scanpunkte bezüglich deren Position in dem äusseren Koordinatensystem, insbesondere die Orientierung der Punktwolke (20a-c) in dem inneren Koordinatensystem, basierend auf den atmosphärischen Zustandsinformationen und/oder geometrische Messinformation angepasst werden.

8. Geodätisches Vermessungsverfahren nach einem der Ansprüche 1 bis 7,
**gekennzeichnet durch**
• mindestens ein weiteres Scannen von weiteren Scanpunkten,
• ein Ableiten einer die weiteren Scanpunkte aufweisenden weiteren Punktwolke (20a-c) in einem weiteren Koordinatensystem,
• ein geodätisch genaues Einzelpunktmessen zu dem mindestens einem Referenzpunkt (25-28) und/oder zu einem weiteren Referenzpunkt (25-28) mit Bestimmen wenigstens der Richtung zu dem Referenzpunkt (25-28) und/oder zu dem weiteren Referenzpunkt (25-28) in dem weiteren Koordinatensystem und
• ein Referenzieren des weiteren Koordinatensystems gegenüber dem äusseren Koordinatensystem basierend zumindest auf der bestimmten Richtung zu dem Referenzpunkt (25-28) in dem weiteren Koordinatensystem,
insbesondere wobei das Scannen und das mindestens eine weitere Scannen von unterschiedlichen Aufstellpunkten (4,14) aus erfolgt, wobei die Orientierungen der jeweiligen Punktwolken (20a-c) in dem äusseren Koordinatensystem und dadurch die Orientierungen der jeweiligen Punktwolken (20a-c) relativ zueinander bestimmt sind.

9. Geodätisches Vermessungsverfahren nach Anspruch 8, **dadurch gekennzeichnet, dass**
basierend auf dem Referenzieren des inneren Koordinatensystems und des weiteren Koordinatensystems gegenüber dem äusseren Koordinatensystem ein zumindest teilweises, gegenseitiges Anpassen von Positionen der bestimmten Scanpunkte und/oder der weiteren Scanpunkte im äusseren Koordinatensystem erfolgt, insbesondere eine Positionskorrektur erfolgt.

10. Geodätisches Vermessungsverfahren nach einem der Ansprüche 1 bis 9,
**dadurch gekennzeichnet, dass**
das geodätische Vermessungsverfahren durch und mit dem geodätischen Vermessungsgerät (1,11) ausgeführt wird, wobei das Vermessungsgerät (1,11) zumindest aufweist
• eine Scanfunktionalität zum scannenden Erfassen der Scanpunkte und Erzeugen der Punktwolke (20a-c) und
• eine Einzelpunktmessfunktionalität zum hochpräzisen Richtungsbestimmen zu dem Referenzpunkt (25-28), insbesondere wobei das geodätische Vermessungsgerät (1,11) nach einem der Ansprüche 11 bis 14 ausgebildet ist.

11. Geodätisches Vermessungsgerät (1,11) ausgebildet als Totalstation, mit
• einer eine Schwenkachse definierenden Basis,
• einem auf der Basis angeordneten, um die Schwenkachse relativ zur Basis motorisiert schwenkbaren Aufbau, wobei der Aufbau eine im wesentlichen orthogonal zur Schwenkachse stehende Kippachse definiert,
• einer Anzieleinheit (2), ausgebildet als Ziel-Fernrohr, wobei die Anzieleinheit (2) um die Kippachse relativ zum Aufbau motorisiert schwenkbar angeordnet ist und eine Emissionseinheit mit einer Strahlquelle zur Erzeugung und Emission einer Messstrahlung (3,33) aufweist,
• einer Entfernungsmessfunktionalität zur Messung von Entfernungen zu Punkten,
• einer Winkelmessfunktionalität zur Messung einer Ausrichtung der Messstrahlung (3,33),
• einer Steuerungs- und Verarbeitungseinheit zur Datenverarbeitung und zur Steuerung des Vermessungsgeräts, und
• einer Einzelpunktmessfunktionalität, wobei die Einzelpunktmessfunktionalität durch die Steuerungs- und Verarbeitungseinheit derart ausführbar ist, dass
□ durch ein hochpräzises Ausrichten der Messstrahlung (3,33) auf mindestens einen Referenzpunkt (25-28) dieser geodätisch genau vermessbar ist, wobei durch den mindestens einen Referenzpunkt (25-28) ein Positionsbezug zu einem äusseren Koordinatensystem bereitstellt wird, und
□ bei der Ausrichtung der Messstrahlung (3,33) auf den mindestens einen Referenzpunkt (25-28) zumindest eine Richtung zu dem Referenzpunkt (25-28) in einem inneren Koordinatensystem des Vermessungsgeräts (1,11) bestimmbar ist,
**gekennzeichnet durch**
• eine referenzpunktunabhängige Scanfunktionalität, wobei die Steuerungs- und Verarbeitungseinheit ausgebildet ist, die Scanfunktionalität derart automatisch auszuführen, dass
□ durch ein motorisiert geführtes, fortlaufendes Ausrichtungsändern der Messstrahlung (3,33) auf innerhalb eines bestimmten Scanbereichs liegende Scanpunkte die Scanpunkte mit einer vorbestimmten Scanpunktauflösung automatisch vermessen werden und
□ eine die Scanpunkte aufweisende Punktwolke (20a-c) in dem inneren Koordinatensystem des Vermessungsgeräts (1,11) erzeugt wird, und
• eine Referenzierungsfunktionalität, bei deren Ausführung durch die Steuerungs- und Verarbeitungseinheit ein Referenzieren des inneren Koordinatensystems gegenüber dem äusseren Koordinatensystem basierend zumindest auf
□ dem durch den Referenzpunkt (25-28) bereitgestellten Positionsbezug zu dem äusseren Koordinatensystem und
□ der durch die Einzelpunktmessfunktionalität bestimmbaren Richtung zu dem Referenzpunkt (25-28) in dem inneren Koordinatensystem
so erfolgt, dass zumindest eine Orientierung der Punktwolke (20a-c) im äusseren Koordinatensystem bestimmt ist.

12. Geodätisches Vermessungsgerät (1,11) nach Anspruch 11, **dadurch gekennzeichnet, dass** die Steuerungs- und Verarbeitungseinheit derart konfiguriert ist, dass mit dem geodätischen Vermessungsgerät (1,11) ein geodätisches Vermessungsverfahren nach einem der Ansprüche 1 bis 10 ausführbar ist.

13. Geodätisches Vermessungsgerät (1,11) nach Anspruch 11 oder 12, **dadurch gekennzeichnet, dass** das Vermessungsgerät (1,11)
• eine Fernsteuereinheit mit einer Auswerteeinheit aufweist, wobei die Referenzierungsfunktionalität durch die Auswerteeinheit ausführbar ist und/oder
• eine Anzeigeeinheit zur Darstellung von Messinformation aufweist, insbesondere wobei ein Scanfortschritt durch ein zumindest teilweises Darstellen von Scanpunkten einer Punktwolke (20a-c) darstellbar ist.

14. Geodätisches Vermessungsgerät (1,11) nach einem der Ansprüche 11 bis 13,
**dadurch gekennzeichnet, dass**
das Vermessungsgerät (1,11) ein GNSS-Modul (5,15) zur Erfassung von GNSS-Positionsinformation aufweist, insbesondere wobei die GNSS-Positionsinformation
• zur Positionskorrektur der Scanpunkte und/oder der Punktwolke (20a-c) im äusseren Koordinatensystem und/oder
• zur Messwertanpassung bei der Scanpunktvermessung und/oder Referenzpunktvermessung
verarbeitbar ist.

15. Computerprogrammprodukt mit Programmcode, der auf einem maschinenlesbaren Träger gespeichert ist, zur
• Steuerung des Scannens und des Einzelpunktmessens und
• Durchführung des Referenzierens des inneren Koordinatensystems gegenüber dem äusseren Koordinatensystem
des geodätischen Vermessungsverfahrens nach einem der Ansprüche 1 bis 10, insbesondere wenn das Programm auf einer als Steuerungs- und Verarbeitungseinheit eines Vermessungsgeräts (1,11) nach einem der Ansprüche 11 bis 14 oder auf einer als Auswerteeinheit nach Anspruch 13 ausgebildeten elektronischen Datenverarbeitungseinheit ausgeführt wird.

## Claims

1. Geodetic surveying method for referencing a coordinate system by means of a geodetic surveying device (1, 11) according to claim 11, comprising
• deriving surface information for an object (20) in respect of an internal coordinate system of the surveying device (1, 11), in particular in respect of a form and/or spatial extent of the object (20), and
• geodetically accurate individual point measuring to at least one reference point (25-28), wherein
o a position reference to an external coordinate system is provided by the at least one reference point (25-28),
o measurement radiation (3, 33) is aligned precisely on the at least one reference point (25-28) and
o at least one direction to the reference point (25-28) is determined in the internal coordinate system when the measurement radiation (3, 33) is aligned on the at least one reference point (25-28),
**characterized by**
• reference point-independent scanning for deriving the surface information, comprising
o automatic scanning of a scanning region, specified in respect of the object (20), by continuously changing in a motorized guided fashion the alignment of the measurement radiation (3, 33),
o determining a respective distance and a respective alignment of the measurement radiation (3, 33) emitted for a distance measurement for scanning points lying within the specified scanning region with a predetermined scanning point resolution, and
o producing a point cloud (20a-c), representing the surface information and having the scanning points, in the internal coordinate system and
• such referencing, in particular automatic referencing, of the internal coordinate system in relation to the external coordinate system on the basis of at least
o the position reference to the external coordinate system provided by the reference point (25-28) and
o the specified direction to the reference point (25-28) in the internal coordinate system,
so that at least one orientation of the point cloud (20a-c) is determined in the external coordinate system.

2. Geodetic surveying method according to Claim 1, **characterized in that**
an absolute position of the at least one reference point (25-28) is known in the external coordinate system and the referencing is brought about on the basis of the known absolute position of the at least one reference point (25-28).

3. Geodetic surveying method according to Claim 1 or 2,
**characterized in that**
the at least one reference point (25-28) is provided in the external coordinate system by
• a geodetically referenced calibration point (25) or
• a retroreflector (26-28) or
• a geodetic surveying device (1, 11) set up with known positioning or alignment.

4. Geodetic surveying method according to any one of Claims 1 to 3,
**characterized in that**
a distance to the at least one reference point (25-28) and a position of the reference point (25-28) are determined in the internal coordinate system and the referencing is brought about on the basis of the determined position of the reference point (25-28) in the internal coordinate system.

5. Geodetic surveying method according to any one of Claims 1 to 4,
**characterized in that**,
• within the scope of scanning when determining the respective distance and the respective alignment of the measurement radiation (3, 33), the alignment of the measurement radiation (3, 33) is modified continuously within the specified scanning region and/or,
• within the scope of referencing, the internal coordinate system is adapted in such a way, in particular in respect of position and scaling of the internal coordinate system, that the internal coordinate system coincides with the external coordinate system, in particular corresponds to the external coordinate system.

6. Geodetic surveying method according to any one of Claims 1 to 5,
**characterized in that**
the internal coordinate system is referenced in relation to the external coordinate system on the basis of further reference information, in particular on the basis of additional GNSS position information and/or on the basis of an additional point common to both the internal and external coordinate system.

7. Geodetic surveying method according to any one of Claims 1 to 6,
**characterized in that**
atmospheric state information is detected and/or geometric measurement information is defined within the scope of the surveying method, in particular meteorological data or measurement axis error, in particular ambient temperature, air pressure and/or atmospheric humidity, wherein
• the atmospheric state information and/or geometric measurement information is processed when determining the distance for the respective scanning points and/or when determining the distance to the at least one reference point (25-28) and there is a distance correction for determining the respective distance on the basis thereof and/or
• the scanning points determined within the scope of the scanning are adapted in respect of the position thereof in the external coordinate system, in particular the orientation of the point cloud (20a-c) in the internal coordinate system, on the basis of the atmospheric state information and/or geometric measurement information.

8. Geodetic surveying method according to any one of Claims 1 to 7,
**characterized by**
• at least one further instance of scanning of further scanning points,
• deriving a further point cloud (20a-c) having the further scanning points in a further coordinate system,
• geodetically accurate individual point measuring in respect of the at least one reference point (25-28) and/or in respect of a further reference point (25-28), with determination of at least the direction to the reference point (25-28) and/or to the further reference point (25-28) in the further coordinate system and
• referencing the further coordinate system in relation to the external coordinate system on the basis of at least the determined direction to the reference point (25-28) in the further coordinate system,
in particular wherein the scanning and the at least one further instance of scanning is brought about from different setup points (4, 14), wherein the orientations of the respective point clouds (20a-c) are determined in the external coordinate system and hence the orientations of the respective point clouds (20a-c) are determined relative to one another.

9. Geodetic surveying method according to Claim 8, **characterized in that**
there is at least partial, mutual adapting of positions of the specified scanning points and/or of the further scanning points in the external coordinate system, in particular there is a position correction, on the basis of the referencing of the internal coordinate system and the further coordinate system in relation to the external coordinate system.

10. Geodetic surveying method according to any one of Claims 1 to 9,
**characterized in that**
the geodetic surveying method is carried out by and using the geodetic surveying device (1, 11), wherein the surveying device (1, 11) comprises at least
• one scanning functionality for detecting the scanning points by scanning and producing the point cloud (20a-c) and
• one individual point measuring functionality for highly precisely determining the direction to the reference point (25-28),
in particular wherein the geodetic surveying device (1, 11) is embodied according to any one of Claims 11 to 14.

11. Geodetic surveying device (1, 11) configured as total station, comprising
• a base defining a pivot axis,
• a structure which is arranged on the base and can pivot in a motorized fashion relative to the base about the pivot axis, wherein the structure defines a tilt axis which is substantially orthogonal to the pivot axis,
• a sighting unit (2) configured as a telescopic sight, wherein the sighting unit (2) is arranged such that it can pivot in a motorized fashion relative to the structure about the tilt axis and has an emission unit with a beam source for generating and emitting measurement radiation (3, 33),
• a distance measuring functionality for measuring distances to points,
• an angle measuring functionality for measuring an alignment of the measurement radiation (3, 33),
• a control and processing unit for data processing and for controlling the surveying device, and
• an individual point measuring functionality, wherein the individual point measuring functionality can be carried out by the control and processing unit in such a way that
o at least one reference point (25-28) can be surveyed in a geodetically accurate fashion by aligning the measurement radiation (3, 33) in a highly precise fashion therewith, wherein a position reference to an external coordinate system is provided by the at least one reference point (25-28), and
o at least one direction to the reference point (25-28) can be determined in an internal coordinate system of the surveying device (1, 11) when aligning the measurement radiation (3, 33) on the at least one reference point (25-28),
**characterized by**
• a reference point-independent scanning functionality, wherein the control and processing unit is configured to automatically carry out the scanning functionality in such a way that
o the scanning points are surveyed automatically with a predetermined scanning point resolution by continuously changing in a motorized guided fashion the alignment of the measurement radiation (3, 33) on scanning points lying within a specified scanning region and
o a point cloud (20a-c) with the scanning points is produced in the internal coordinate system of the surveying device (1, 11), and
• a referencing functionality, wherein there is, when the latter is carried out by the control and processing unit, referencing of the internal coordinate system in relation to the external coordinate system on the basis of at least
o the position reference to the external coordinate system provided by the reference point (25-28) and
o the direction to the reference point (25-28) in the internal coordinate system, which can be determined by the individual point measuring functionality,
such that at least one orientation of the point cloud (20a-c) is determined in the external coordinate system.

12. Geodetic surveying device (1, 11) according to Claim 11,
**characterized in that**
the control and processing unit is configured in such a way that a geodetic surveying method according to any one of Claims 1 to 10 can be carried out using the geodetic surveying device (1, 11).

13. Geodetic surveying device (1, 11) according to Claim 11 or 12,
**characterized in that**
the surveying device (1, 11)
• comprises a remote control unit with an evaluation unit, wherein the referencing functionality can be carried out by the evaluation unit and/or
• comprises a display unit for depicting measurement information, in particular wherein a scanning progress can be depicted by at least partial depiction of scanning points of a point cloud (20a-c).

14. Geodetic surveying device (1, 11) according to any one of Claims 11 to 13,
**characterized in that**
the surveying device (1, 11) comprises a GNSS module (5, 15) for detecting GNSS position information, in particular wherein the GNSS position information can be processed
• for correcting the position of the scanning points and/or of the point cloud (20a-c) in the external coordinate system and/or
• for adapting measured values during the scanning point survey and/or reference point survey.

15. Computer program product with program code, which is stored on a machine-readable medium, for
• controlling the scanning and the individual point measuring and
• carrying out the referencing of the internal coordinate system in relation to the external coordinate system
of the geodetic surveying method according to any one of Claims 1 to 10, in particular if the program is executed on an electronic data processing unit embodied as control and processing unit of a surveying device (1, 11) according to any one of Claims 11 to 14 or on an electronic data processing unit embodied as evaluation unit according to Claim 13.

## Revendications

1. Procédé de mesure géodésique pour le référencement d'un système de coordonnées au moyen d'un appareil de mesure géodésique (1, 11) selon la revendication 11 avec
• une extraction d'informations sur la surface pour un objet (20) par rapport à un système de coordonnées intérieures de l'appareil de mesure (1, 11), en particulier par rapport à une forme et/ou une extension spatiale de l'objet (20), et
• une mesure d'un seul point géodésique précis par rapport à au moins un point de référence (25-28), cependant
□ qu'une référence de position par rapport à un système de coordonnées extérieures est mise à disposition par le point de référence qui existe au moins (25-28),
□ qu'un rayonnement de mesure (3, 33) est orienté précisément sur le point de référence qui existe au moins (25-28) et
□ qu'au moins une direction par rapport au point de référence (25-28) est déterminée dans le système de coordonnées intérieures lors de l'orientation du rayonnement de mesure (3, 33) sur le point de référence qui existe au moins (25-28)
**caractérisé par**
• un balayage indépendant du point de référence pour extraire les informations sur la surface, avec
□ un balayage automatique d'une plage de balayage précise par rapport à l'objet (20) par la variation consécutivement de l'orientation du rayonnement de mesure (3, 33) menée de manière motorisée,
□ une détermination d'une distance respective et d'une orientation respective du rayonnement de mesure (3, 33) émis pour une mesure de la distance pour des points de balayage situés à l'intérieur de la plage de balayage précise, dans une résolution de point de balayage prédéfinie, et
□ une génération d'un nuage de points (20a-c) qui représente les informations sur la surface et qui présente les points de balayage dans le système de coordonnées intérieures et
• un référencement, en particulier un référencement automatique, du système de coordonnées intérieures par rapport au système de coordonnées extérieures sur la base d'au moins
□ la référence de position par rapport au système de coordonnées extérieures mise à disposition par le point de référence (25-28) et
□ l'orientation précise par rapport au point de référence (25-28) dans le système de coordonnées intérieures
tel qu'au moins une orientation du nuage de points (20a-c) est déterminée dans le système de coordonnées extérieures.

2. Procédé de mesure géodésique selon la revendication 1, **caractérisé en ce qu'**une position absolue du point de référence qui existe au moins (25-28) dans le système de coordonnées extérieures est connue et que le référencement se fait sur la base de la position absolue connue du point de référence qui existe au moins (25-28).

3. Procédé de mesure géodésique selon la revendication 1 ou 2, **caractérisé en ce que** le point de référence qui existe au moins (25-28) est mis à disposition dans le système de coordonnées extérieures par
• un point de mesure à référence géodésique (25) ou
• un rétroréflecteur (26-28) ou
• un appareil de mesure géodésique (1, 11) installé dans un positionnement ou une orientation connue.

4. Procédé de mesure géodésique selon l'une des revendications 1 à 3, **caractérisé en ce qu'**une distance par rapport à au moins un point de référence (25-28) et une position du point de référence (25-28) dans le système de coordonnées intérieures sont déterminées et que le référencement se fait sur la base de la position précise du point de référence (25-28) dans le système de coordonnées intérieures.

5. Procédé de mesure géodésique selon l'une des revendications 1 à 4, **caractérisé en ce**
• **que** dans le cadre du balayage, lors de la détermination de la distance respective et de l'orientation respective du rayonnement de mesure (3, 3,3), l'orientation du rayonnement de mesure (3, 33) est variée en continu à l'intérieur de la plage de balayage précise et/ou
• dans le cadre du référencement, le système de coordonnées intérieures est adapté, en particulier pour ce qui est de la position et de la mise à l'échelle du système de coordonnées intérieures, de telle manière que le système de coordonnées intérieures coïncide avec le système de coordonnées extérieures, en particulier qu'il corresponde au système de coordonnées extérieures.

6. Procédé de mesure géodésique selon l'une des revendications 1 à 5, **caractérisé en ce que** le référencement du système de coordonnées intérieures se fait par rapport au système de coordonnées extérieures sur la base d'autres informations de référence, en particulier sur la base d'informations supplémentaires de position GNSS et/ou sur un point connu supplémentaire commun au système de coordonnées intérieures et au système de coordonnées extérieures.

7. Procédé de mesure géodésique selon l'une des revendications 1 à 6, **caractérisé en ce que**, dans le cadre du procédé de mesure, une information d'état atmosphérique est saisie et/ou une information de mesure géométrique est définie, en particulier des données météorologiques ou des erreurs d'axe de mesure, en particulier la température ambiante, la pression de l'air et/ou l'humidité de l'air, cependant que
• lors de la détermination de la distance pour les points de balayage respectifs et/ou lors de la détermination de la distance par rapport au point de référence qui existe au moins (25-28), l'information d'état atmosphérique et/ou l'information de mesure géométrique est traitée et que, sur la base de celle-ci, une correction de la distance est effectuée pour la détermination de la distance respective et/ou
• les points de balayage précis dans le cadre du balayage sont adaptés pour ce qui est de leur position dans le système de coordonnées extérieures, en particulier de l'orientation du nuage de points (20a-c) dans le système de coordonnées intérieures, sur la base des informations d'état atmosphérique et/ou de l'information de mesure géométrique.

8. Procédé de mesure géodésique selon l'une des revendications 1 à 7, **caractérisé par**
• au moins un balayage supplémentaire d'autres points de balayage,
• une extraction d'un autre nuage de points (20a-c) qui présente les autres points de balayage dans un autre système de coordonnées,
• une mesure d'un seul point géodésique précis par rapport au point de référence qui existe au moins (25-28) et/ou par rapport à un autre point de référence (25-28) avec détermination d'au moins la direction par rapport au point de référence (25-28) et/ou à l'autre point de référence (25-28) dans l'autre système de coordonnées et
• un référencement de l'autre système de coordonnées par rapport au système de coordonnées extérieures sur la base d'au moins la direction précise par rapport au point de référence (25-28) dans l'autre système de coordonnées,
en particulier, cependant que le balayage et le balayage supplémentaire qui existe au moins se font à partir de différents points d'implantation (4, 14), cependant que les orientations des nuages de points respectifs (20a-c) dans le système de coordonnées extérieures et donc les orientations des nuages de points respectifs (20a-c) sont déterminées les unes par rapport aux autres.

9. Procédé de mesure géodésique selon la revendication 8, **caractérisé en ce que**, sur la base du référencement du système de coordonnées intérieures et de l'autre système de coordonnées par rapport au système de coordonnées extérieures, il est effectué une adaptation au moins partielle mutuelle de positions des points de balayage précis et/ou des autres points de balayage dans le système de coordonnées extérieures, en particulier une correction de position.

10. Procédé de mesure géodésique selon l'une des revendications 1 à 9, **caractérisé en ce que** le procédé de mesure géodésique est exécuté par et avec l'appareil de mesure géodésique (1, 11), cependant que l'appareil de mesure (1, 11) présente au moins
• une fonctionnalité de balayage pour la saisie par balayage des points de balayage et pour la génération du nuage de points (20a-c) et
• une fonctionnalité de mesure d'un seul point pour la détermination extrêmement précise de la direction par rapport au point de référence (25-28),
en particulier cependant que l'appareil de mesure géodésique (1, 11) est configuré selon l'une des revendications 11 à 14.

11. Appareil de mesure géodésique (1, 11) configuré comme station totale avec
• une base qui définit un axe de pivotement,
• une structure placée sur la base, pivotante de manière motorisée autour de l'axe de pivotement par rapport à la base, cependant que la structure définit un axe de basculement qui est sensiblement orthogonal par rapport à l'axe de pivotement,
• une unité de visée (2), configurée comme une lunette de visée, cependant que l'unité de visée (2) est placée pivotante autour de l' axe de basculement de manière motorisée par rapport à la structure et présente une unité d'émission avec une source de rayonnement pour la génération et l'émission d'un rayonnement de mesure (3, 33),
• une fonctionnalité de mesure de distance pour la mesure de distances par rapport à des points,
• une fonctionnalité de mesure angulaire pour la mesure d'une orientation du rayonnement de mesure (3, 33),
• une unité de commande et de traitement pour le traitement de données et pour la commande de l'appareil de mesure et
• une fonctionnalité de mesure d'un seul point, cependant que la fonctionnalité de mesure d'un seul point peut être exécutée par l'unité de commande et de traitement de telle manière que,
□ par une orientation extrêmement précise du rayonnement de mesure (3, 33) sur au moins un point de référence (25-28), celui-ci peut faire l'objet d'une mesure géodésique précise, cependant qu'une référence de position par rapport à un système de coordonnées extérieures est mise à disposition par le point de référence qui existe au moins (25-28) et
□ qu'au moins une direction par rapport au point de référence (25-28) peut être déterminée dans un système de coordonnées intérieures de l'appareil de mesure lors de l'orientation du rayonnement de mesure (3, 33) sur le point de référence qui existe au moins (25-28),
**caractérisé par**
• une fonctionnalité de balayage indépendante du point de référence, cependant que l'unité de commande et de traitement est configurée pour exécuter la fonctionnalité de balayage de manière automatique telle que
□ les points de balayage sont mesurés automatiquement avec une résolution prédéfinie de point de balayage par une variation consécutive de l'orientation du rayonnement de mesure (3, 33), guidée de manière motorisée, sur des points de balayage situés à l'intérieur d'une plage de balayage précise et
□ qu'un nuage de points (20a-c) qui présente les points de balayage est généré dans le système de coordonnées intérieures de l'appareil de mesure (1, 11) et
• une fonctionnalité de référencement pour l'exécution de laquelle un référencement du système de coordonnées intérieures par rapport au système de coordonnées extérieures se fait par l'unité de commande et de traitement sur la base d'au moins
∘ la référence de position par rapport au système de coordonnées extérieures mise à disposition par le point de référence (25-28) et
∘ la direction par rapport au point de référence (25-28) dans le système de coordonnées intérieures qui peut être déterminée par la fonctionnalité de mesure d'un seul point
de telle manière qu'au moins une orientation du nuage de points (20a-c) est déterminée dans le système de coordonnées extérieures.

12. Appareil de mesure géodésique (1, 11) selon la revendication 11, **caractérisé en ce que** l'unité de commande et de traitement est configurée de telle manière qu'un procédé de mesure géodésique selon l'une des revendications 1 à 10 peut être exécuté avec l'appareil de mesure géodésique (1, 11).

13. Appareil de mesure géodésique (1, 11) selon la revendication 11 ou 12, **caractérisé en ce que** l'appareil de mesure (1, 11)
• présente une unité de télécommande avec une unité d'évaluation, la fonctionnalité de référencement pouvant être exécutée par l'unité dévaluation et/ou
• présente une unité d'affichage pour la représentation d'informations de mesure, en particulier un avancement du balayage pouvant être représenté par une représentation au moins partielle de points de balayage d'un nuage de points (20a-c).

14. Appareil de mesure géodésique (1, 11) selon l'une des revendications 11 à 13, **caractérisé en ce que** l'appareil de mesure (1, 11) présente un module GNSS (5, 15) pour la saisie d'informations de position GNSS, en particulier les informations de position GNSS pouvant être traitées
• pour la correction de position des points de balayage et/ou du nuage de points (20a-c) dans le système de coordonnées extérieures et/ou
• pour l'adaptation des valeurs de mesure lors du mesurage des points de balayage et/ou lors du mesurage des points de référence.

15. Produit de programme d'ordinateur avec un code de programme qui est mémorisé sur un support lisible par machine pour
• la commande du balayage et de la mesure d'un seul point et
• l'exécution du référencement du système de coordonnées intérieures par rapport au système de coordonnées extérieures
du procédé de mesure géodésique selon l'une des revendications 1 à 10, en particulier lorsque le programme est exécuté sur une unité de traitement de données électronique configurée comme unité de commande et de traitement d'un appareil de mesure (1, 11) selon l'une des revendications 11 à 14 ou configurée comme unité d'évaluation selon la revendication 13.
